# EUROPEAN PATENT SPECIFICATION

(11) **EP 2 360 016 B1**
(45) Date of publication and mention of the grant of the patent: **03.04.2013**
(21) Application number: 10190019.9
(22) Date of filing: 04.11.2010
(51) Int. Cl.: B32B 37/10, B32B 37/15, B29C 47/88, B05D 1/26, B05D 3/12, B05D 7/08, B32B 37/08

(54) **Coating of rigid wood products with thermoplastic polymer**
Beschichtung starrer Holzprodukten mit thermoplastischem Polymer
Revêtement de produits rigides à base de bois avec un polymère thermoplastique

(30) Priority: 05.11.2009 FI 20096143
(43) Date of publication of application: 24.08.2011
(73) Proprietor: Metsäliitto Osuuskunta, 02020 Metsä (FI)
(72) Inventor: Ekman, Jussi, 40270 Palokka (FI); Sokka, Kasperi, 40520 Jyväskylä (FI); Salmikuukka, Timo, 44120 Äänekoski (FI); Holma, Pekka, 15150 Lahti (FI); Smått, Rauno, 37800 Toijala (FI); Laiho, Erkki, 00280 Helsinki (FI); Sainio, Markku, 06500 Porvoo (FI); Lindström, Helge, 06650 Hamari (FI)
(74) Representative: Laako, Tero Jussi

(56) References cited:
- WO-A1-97/10903
- US-A- 4 143 187
- US-A- 4 844 766

## Description

The invention relates to a method for coating inflexible board type and predominantly wooden products, which have an averagely planar product top surface and a product bottom surface, as well as a product length and a product width, with a thermoplastic polymer, said method comprising: allowing said coatable product to move in a motion direction consistent with its product length, extruding molten thermoplastic polymer from a die gap of an extrusion die for a molten coating film which is conducted onto the product top surface of the coatable product by means of a rotating upper roll across a line pressure point at which said molten coating film established by the thermoplastic polymer makes contact with the top surface of the coatable product, said die gap lying at a distance from said line pressure point; allowing said molten coating film to solidify, thus forming a polymer coating in solid form and in attachment with the top surface of the product. The invention relates also to an apparatus for practicing this method.

Patent publication US 4,143,187 discloses a process for laminating an inflexible sheet substrate, such as a panel of wood, with a layer of thermoplastic polymer by an extrusion method in such a way that the molten plastic is extruded onto the product surface by means of an extrusion coating die. In the described apparatus, the extrusion coating die has its die gap opening onto the surface of a product and the panel type product first passes a metal block of the extrusion coater in surface-to-surface contact and then the die gap itself, whereby the panel type product constitutes one lip of the extrusion die gap and the metal block constitutes the other lip of the extrusion die gap, the mutual relationship thereof being adjustable. The molten thermoplastic polymer is then compressed between the metal block and the panel type product as the product is proceeding past the die gap. This is followed by cooling the coating in an open space with an air flow. As preferred polymers, the publication mentions poly-α-olefins, polyamides, polystyrene and polyvinyl chloride. In this process, the oxidation or other similar treatment of extrusible molten plastic is not possible. Patent publication FI-100177 describes a product-coating process, wherein particularly onto the surface of a porous and/or moisture-containing product, such as a wooden board, is conducted a layer of thermoplastic polymer. This molten thermoplastic polymer is conducted onto the product surface from a nozzle presently in contact with the product, whereafter a layer is formed when the product and the cooling and pressing surface of a specific length, located after the nozzle and providing an extension for one edge of the nozzle orifice, are moving relative to each other, whereupon a solidified layer is formed as this advances in contact with the cooling and pressing surface, which surface prevents the material of the layer from expanding after the nozzle in a direction perpendicular to the surface of the coated product, and, at a specific distance from the product surface, determines at the same time the layer thickness. The thus extruded polymer layer is pressed after the nozzle by means of a pressing unit, such as a roll or a set of rolls, which is present at the cooling and compression surface and is separately loaded towards the product surface. According to the process, onto the melt surface can be conducted a gaseous substance through the nozzle for modifying properties of the melt. Hence, in this arrangement, the formation of bubbles in a melt layer on the surface of always moisture-containing wood can be prevented and at the same time, if necessary, properties of the melt can be regulated during the course of extrusion - by means of a gaseous medium - for example to improve adhesion. Accordingly, the arrangement of FI-100177 can be regarded as an improved version of what is disclosed in US 4,143,187. This arrangement enables the production of coatings having a thickness within the range of 0,5 ... 3 mm, i.e. relatively thick layers, since the cooling and pressing surface present as an extension of the nozzle functions as a mold which directly defines the layer thickness. Further in this arrangement, the surface of coatable plywood must be very accurately planar, because a deviation from planarity causes a corresponding deviation in the coating layer thickness. This process of the cited patent publication has also been discussed in a Licentiate thesis by Outi Tervala: "Coating of plywood with thermoplastics" - Tampere University of Technology, Department of Materials Science, Plastics Engineering Laboratory - Aug. 9, 1999, stating, among other things, that the penetrability of a coating into wood pores is worth enhancing by decreasing the melt viscosity of thermoplastic, which is in turn effected by raising its temperature and by shortening the melt contact time. According to this study, the pressure of molten thermoplastic should be maintained as low as possible in order to prevent the molten mass from blocking with its own pressure the porosity existing in wood surface.

Patent publication FI-80637 describes a process for coating plate-like products, such as pieces of wood, with thermoplastic polymer, in which process molten thermoplastic polymer is extruded from the die gap of an extrusion die to a film, which is pressed firmly to the surface of the plate-shaped product by means of a press roller or press belt, said plate-shaped product being in the longitudinal direction an essentially rigid plate which advances in a single plane. In this process, the die gap of the extrusion die is at an adjustable distance from the surface of the product to be coated and from the place at which the coating web formed by the extruded molten thermoplastic polymer, i.e. the molten film, meets the surface of the product to be coated, thereby allowing oxidation of the thermoplastic polymer before it is pressed firmly to the surface of the plate-shaped product. Regarded as benefits of this process have been the adjustability of a distance from the product surface, as well as the establishment of an oxidation effect in this air gap provided by the extrusion die between the die gap and the product, as well as the possibility of making various laminate coatings, whereby the molten polymer comes along with some previously manufactured film.

Patent US 4,844,766 discloses a coating apparatus for coating a flexible continuous support web with an extruded thermoplastic polymer, comprising a double-band press that includes an apparatus for conducting heat away from the thermoplastic polymer in the reaction zone in which the area pressure is applied.

An objective of the invention is to provide a method which enables a porous and/or at least moisture-containing product, such as a wooden board, to be coated with a thermoplastic polymer, such that the polymer coating is in a firm attachment with a surface of the product and the polymer coating is as flawless as possible, in other words it would not have, at least to a significant degree, coating defects such as pores or the like, resulting from the effect of moisture evaporating from the heating product during the process. A second objective of the invention is to provide such a method which would enable, if necessary, providing not only relatively thick polymer coatings but also, whenever desirable, relatively thin polymer coatings or coatings less than 0,5 mm in thickness.

In order to solve the foregoing problems and to achieve said objectives, a method of the invention is characterized by claim 4, and an apparatus of the invention by claim 1.

The invention will now be described in detail with reference to the accompanying figures.
Fig. 1 shows schematically a first embodiment for an apparatus of the invention in a side view visualized in a direction perpendicular to the motion direction of products.
Fig. 2 shows schematically a second embodiment for an apparatus of the invention in the same view as in fig. 1, from a direction I in fig. 3.
Fig. 3 shows the embodiment of fig. 2 in a plan view visualized in a direction perpendicular to the motion direction of products, along a plane II-II in fig. 2.
Fig. 4 shows a pressure load distribution in the motion direction of a coating film and a polymer coating produced therefrom with a line A in the case of fig. 1 and with a line B in the case of fig. 2.

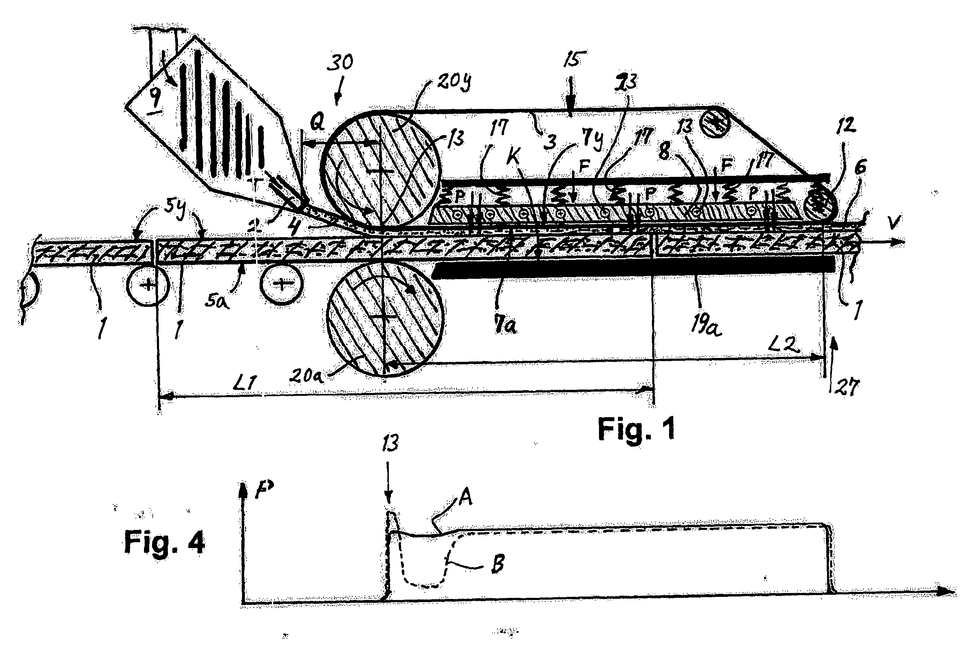

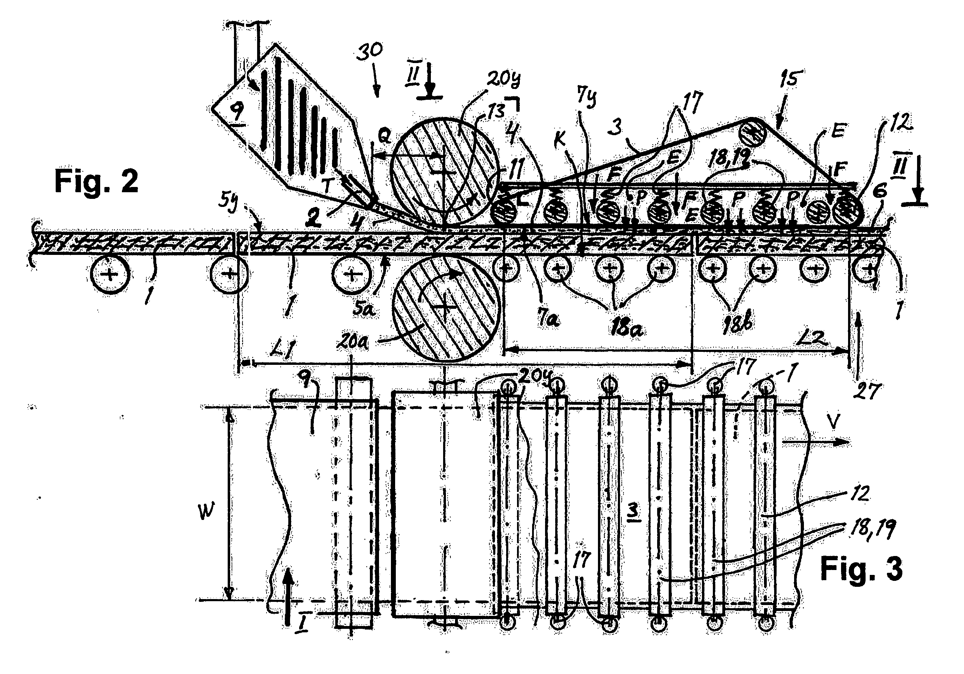

The presently discussed method comprises coating inflexible board type and predominantly wooden products 1 with a thermoplastic polymer, typically with an extrusible thermoplastic polymer. This polymer is in most cases a thermosetting plastic, but may possibly also be a thermoplastic. The products 1, such as plywood boards, wood fiberboards, chipboards or the like, have an averagely planar product top surface 5y and an averagely planar product bottom surface 5a, which are typically parallel to each other, as well as a product length L1 and a product width W. In figs. 1 and 2, this product width W lies perpendicularly to the image plane. In the method, the product to be coated is allowed to move in a motion direction V consistent with its product length L1, first across a plastic or polymer extruding section 30 and then across a cooling section 15, as shown in the figures. Over the extruding section 30, a molten thermoplastic polymer T is extruded from a die gap 2 of an extrusion die 9 for a molten coating film 4 which is conducted onto the product top surface 5y of the coatable product 1 by means of a rotating upper roll 20y across a line pressure point 13. At the line pressure point 13, i.e. at a nip, said molten coating film 4 established by the thermoplastic polymer makes contact with the top surface 5y of the coatable product 1 as the molten coating film is pre-pressed by the upper roll 20y to an attachment with the product top surface. What is explicitly used in this case is such a plastic/polymer extruding practice in which the die gap 2 is spaced at a distance Q from the line pressure point 13, i.e. in which exists a so-called open time. Hence, in this case, the question is specifically about pressing a molten film to an attachment with the surface of a predominantly wooden product, not about continuous mold casting onto the surface of a piece traveling through the mold. Pressing the previously manufactured molten coating film 4 enables also making thin polymer coatings 6 on a surface of the products 1, for example because a thickness H of the coating is readily adjustable and controllable by a gauge of the die gap 2, by an amount of plastic extrusible per unit time, and by a rotating speed of the upper roll 20y and/or a rate of motion of the product in the motion direction V, and by the mutual relationships thereof. In addition, if necessary, the molten coating film 4 can be pretreated chemically or electrically over the extent of this distance Q. In the cooling section 15, this molten coating film 4 is allowed to solidify, thus forming a polymer coating 6 in solid form and in attachment with the top surface of the product.

The underlying principle in a method of the invention is that the cooling section 15 is used for conducting simultaneously both surface pressing the coating film 4 onto the product 1 and cooling the coating film 4 for the solid polymer coating 6. In other words, after the coating film 4 has been brought in molten form into a contact with the product top surface 5y of the coatable product 1, this molten coating film 4 is allowed to cool while in such a surface contact with the product top surface 5y that the coating film and the product's top surface have a sufficient mutual adhesion. In a method of the invention, the molten coating film 4 is then allowed in the cooling section 15 to remain in surface contact with the product top surface 5y. This surface contact is sustained by means of a press belt 3, which is pressed against the top surface 5y with a pressure load P and which travels in the direction of the product's length L1, thus keeping the coating film 4 pressed against the product top surface 5y. Respectively, the static and/or dynamic pressure load is sufficiently high for preventing the coating film 4 from rising off the product top surface, even though the coating film shrinkage, caused by the cooling and solidification of the molten plastic/polymer T, results in dimensional differences between itself and the product and thereby attempts to detach the coating film from the product top surface 5y. As a result, the pressure load maintains the bottom surface of the molten plastic/polymer T in contact with the product top surface 5y, thus enabling a desired adhesion between the plastic/polymer and the product. At the same time, this press belt 3 is subjected to cooling, which means that the discussed press belt 3 provides for the coating film 4 of thermoplastic polymer a cooling effect sufficient for the coating film 4 to solidify from molten form to solid form. In other words, there are concurrently maintained a surface pressure established by the pressure load P and a cooling effect of the coating film, both being provided by the moving press belt 3. As a result, the coating film 4 solidifies and becomes attached to the product top surface 5y, providing the product 1 with said polymer coating 6. The above-mentioned surface contact provided by the press belt 3 is sustained by means of appropriate compression elements across a distance L2 extending in the motion direction V. Along this distance L2, the press belt has a belt bottom surface 7a pressing against the product 1, and a belt top surface 7y facing away from the product. In order to provide a cooling effect, the belt top surface 7y of the press belt is cooled across the distance L2 either by a flowing cooling medium E or a cooling block 8.

The above-mentioned compression elements are used for applying to the belt top surface 7y a suitable force F, transmitting through the press belt 3 into the pressure load P directed towards the top surface 5y of the product 1. This pressure load P, established by the press belt 3, has been chosen in view of being able to overcome a separation effect caused by the vaporization of moisture present in the product 1. This means that the press belt's pressure load P is sufficiently high for preventing the coating film 4 from being lifted off the product top surface 5y, even though the heat supplied into the product by the molten plastic/polymer T attempts to vaporize the moisture or water present in the product and thereby attempts to lift the coating film off the product top surface 5y. Hence, the pressure load P according to the invention, provided by the press belt 3, is capable of opposing the vapor pressure of water evaporating from the product and that of other evaporating substances, whereby the coating film 4 solidifying from the melt has an adhesion with the product top surface 5y for a sufficient attachment. In addition, the cooling or cooling effect of the press belt 3 is chosen in view of having the coating film 4 of thermoplastic polymer thoroughly solidified at a start 27 of the cooling section. Said pressure load P from the press belt 3 is thereby a pressure load applied explicitly to the product, i.e. a force per unit area, which exceeds the ambient atmospheric pressure.

In order to provide such a press belt's pressure load P, which is adequately capable of opposing the vapor pressure of water evaporating from the product 1 and that of other corresponding evaporating substances, a reasonably low pressure load P will be sufficient. At present, it is believed that in many cases it is sufficient to use a pressure load P which is less than 0,01 bar or not higher than 0,01 bar. In any event, a satisfactory adhesion between the product's top surface 5y and the film/coating 4, 6 is obtained if the static and/or dynamic pressure load P is not lower than 0,01 bar. It should be noted in selecting/designing the pressure load P that said pressure depends at least on a type of the product 1, a moisture content of the product, a type of plastic/polymer and its extruding temperature, etc.

If necessary, the pressure load P from the press belt 3 can be chosen in view of being also capable of straightening out possible curvatures and distortions in said inflexible and predominantly wooden products 1 as it presses the product bottom surface 5a of said product against supporting rolls 18a or supporting rollers 18b or a flat block 19a or flat blocks establishing a planar supporting platform K. With such a design of the pressure load P, it may be possible to reduce product defects and/or to increase production rate, depending on a type of product and a type of plastic/polymer. To straighten the product 1, in case it is curved or warped, requires in most cases the pressure load P of not lower than 0,03 bar.

The above-described method is applied in a coating apparatus described hereinafter for coating inflexible board type and predominantly wooden products 1 with a thermoplastic polymer, said products thus including a product top surface 5y and a product bottom surface 5a, as well as a product length L1 and a product width W. The coating apparatus comprises in an extruding section 30 at least one extrusion die 9, delivering from its die gap 2 a molten thermoplastic polymer T in the form of a molten coating film 4 having a width that matches the product width W, as well as a rotating upper roll 20y, by means of which the molten coating film 4, issuing from the die gap 2, is conducted onto the product top surface 5y of the coatable product across a line pressure point 13 at which the molten coating film established by the thermoplastic polymer makes contact with the coatable product's top surface 5y. The die gap 2 lies at a distance Q from the line pressure point 13. The coating apparatus further comprises supporting rolls 18a or supporting rollers 18b or a flat block 19a or flat blocks establishing a supporting platform K, said elements enabling the movement of said product 1 in a linear motion direction V, as well as a cooling section 15 in which said molten coating film 4 is allowed to solidify, thus forming a polymer coating 6 in solid form and in attachment with the product's top surface.

The cooling section 15 of a coating apparatus according to the invention comprises a press belt 3 extending around rolls 20y and 12 or 11 and 12 set at a distance L2 from each other and running co-directionally with the coatable product's length L1, said belt having a belt top surface 7y and a belt bottom surface 7a across this distance, as well as between these rolls 20y and 12 or 11 and 12 at least one cooling block 8 and/or press rolls 18 or press rollers 19, which is/are in surface contact with the belt top surface 7y of the press belt. The press belt 3 is preferably a metal belt, such as a steel belt, but it may also consist of or be coated with a material with a low adherence to the molten coating film 4. Suitable for this purpose are for example "teflon" and the like. The apparatus has its cooling section further comprising compression elements 17, which are adapted to push at least some of the press rolls 18 or the press rollers 19 or the cooling blocks 8 in order to compress the press belt's top surface 7y with such a force F towards a supporting platform K that the press belt 3 - more specifically the bottom surface 7a of this press belt - establishes a pressure load P between the coating film 4 and the product top surface 5y. This pressure load P sustains the coating film and the product top surface in mutual surface contact. In addition, according to the invention, said at least one cooling block 8 and/or press roll 18 are subjected to cooling, and/or between said cooling blocks 8 and/or press rolls 18 and/or press rollers 19 exist flow channels 23 for a flowing medium E. The result is that a mutual compression between the coating film 4 and the product 1 will be sustained during the period of the coating film cooling and solidifying into the polymer coating 6. Underneath the line pressure point 13, the product, 1 ic supported by a rotating lower 20a. Typically, at least the upper roll 20y is cooled.

The press belt 3, which functions as a press element, circles in a preferred embodiment around the upper roll 20y and a second opposing roll 12 set at the distance L2 therefrom, as shown in fig. 1. It should be noted that this embodiment described above and depicted in fig. 1 does not strictly speaking have an actual line pressure point but, instead, the apparent line pressure point 13 which is coincident with the shortest connecting line between the upper roll 20y and the backing-providing lower roll 20a or the upper roll 20y and a backing-providing flat block 19a or its extension. Even in this case, the line pressure point 13 constitutes a starting step for a pressure load starting in the motion direction, which step can be referred to as a step function and which is thereby unambiguous and analogous with the real line pressure point. Alternatively, the press belt 3 may circle around first and second opposing rolls 11 and 12, as shown in fig. 2. In this latter embodiment, the first opposing roll 11 should be positioned as close as possible to the upper roll 20y providing the line pressure point 13. It should further be noted that the presently discussed static and/or dynamic pressure load can be constant or variable over the cooling length L2. Distribution of the pressure load P can be regulated by making adjustments in the force of the compression elements 17 directed towards the product 1.

## Claims

1. A coating apparatus for coating inflexible board type and predominantly wooden products (1), which have an averagely planar product top surface (5y) and a product bottom surface (5a), as well as a product length (L1) and a product width (W), with a thermoplastic polymer, said coating apparatus comprising:
- an extrusion die (9) which delivers from its die gap (2) a molten thermoplastic polymer (T) in the form of a molten coating film (4) having a width that matches the product width (W);
- a rotating upper roll (20y), by means of which said molten coating film (4), issuing from the die gap, is conducted onto the product top surface (5y) of the coatable product across a line pressure point (13) at which said molten coating film established by the thermoplastic polymer makes contact with the product top surface (5y) of the coatable product, said die gap (2) lying at a distance (Q) from said line pressure point (13);
- supporting rolls and/or supporting rollers and/or one or more flat blocks (19a) establishing a supporting platform (K), said element/elements enabling the movement of said product (1) in a linear motion direction (V); as well as
- a cooling section (15) in which said molten coating film (4) is allowed to solidify, thus forming a polymer coating (6) in solid form and in attachment with the product's top surface,
wherein said cooling section (15) comprises:
- a press belt (3) extending around rolls (20y and 12 or 11 and 12) set at a distance (L2) from each other and running co-directionally with the coatable product's length (L1), said belt having a belt top surface (7y) and a belt bottom surface (7a) across this distance;
- between the rolls (20y and 12 or 11 and 12) at least one cooling block (8) and/or press rolls (18) or press rollers (19), which at leat one cooling block and/or press rolls or press rollers is/are in surface contact with the belt top surface (7y) of the press belt, and compression elements (17) which are adapted to push at least some of the press rolls or the press rollers or the at leat one cooling block towards the supporting platform (K) with such a force (F) which generates with the press belt a pressure load (P) between the coating film (4) and the product top surface (5y), thus sustaining their mutual surface contact; and
- said at least one cooling block (8) and/or the press rolls (18) are subjected to cooling, or between said cooling blocks (8) and/or press rolls (18) and/or press rollers (19) exist flow channels (23) for a flowing medium (E), the mutual compression between the coating film (4) and the product (1) being sustained during the period of the coating film cooling and solidifying into the polymer coating (6), whereby
- said pressure load (P) has been chosen in view of its capability of overcoming a separation effect, which is caused by the vaporization of moisture present in the product (1) and by the cooling shrinkage of thermoplastic polymer and in which the vaporization attempts to lift the coating film off the product top surface (5y).

2. A coating apparatus according to claim 1, **characterized in that** underneath said line pressure point (13) the product (1) is supported by a rotating lower roll (20a); and that at least the upper roll (20y) is cooled.

3. A coating apparatus according to claim 1 or 2, **characterized in that** said press belt (3) is a metal belt.

4. A method for coating inflexible board type and predominantly wooden products (1), which have an averagely planar product top surface (5y) and a product bottom surface (5a), as well as a product length (L1) and a product width (W), with a thermoplastic polymer, by using the coating apparatus defined in claim 1, said method comprising:
- allowing said coatable product to move in a motion direction (V) consistent with its product length (L1);
- extruding a molten thermoplastic polymer (T) from a die gap (2) of an extrusion die (9) for a molten coating film (4) which is conducted onto the product top surface of the coatable product by means of a rotating upper roll (20y) across a line pressure point (13) at which said molten coating film established by the thermoplastic polymer makes contact with the product top surface (5y), the die gap lying at a distance (Q) from the line pressure point (13);
- allowing said molten coating film (4) to solidify, thus forming a polymer coating (6) in solid form and in attachment with the top surface of the product,
wherein the method comprises:
- allowing the molten coating film (4) to be in surface contact with the product top surface (5y), said surface contact being sustained by means of a press belt (3), compressed against the top surface (5y) with a pressure load (P) and running co-directionally with the product's length (L1), whereby the coating film (4) remains pressed against the product top surface (5y); and
- cooling said press belt (3) and allowing said press belt (3) to cool the coating film (4) of thermoplastic polymer from molten form to solid form while maintaining said surface compression provided by the pressure load (P), whereby the coating film (4) solidifies and becomes attached to the product top surface (5y), thus providing the product (1) with said polymer coating (6); and
- whereby pressure load (P) provided by the press belt has been chosen in view of its capability of overcoming a separation effect, which is caused by the vaporization of moisture present in the product (1) and by the solidification shrinkage of thermoplastic polymer and in which the vaporization attempts to lift the coating film off the product top surface (5y).

5. A method according to claim 4, **characterized in that** the surface contact achieved by said press belt (3) is sustained across a distance (L2), which extends in the motion direction (V) and along which the press belt has a belt bottom surface (7a) pressing against the product (1) and a belt top surface (7y) facing away from the product, and the press belt has its belt top surface (7y) subjected to cooling across said distance (L2) either with a flowing cooling medium (E) or a cooling block (8).

6. A method according to claim 4 or 3, **characterized in that** the coating film (4) solidifying from the melt has an adhesion with the product top surface (5y) providing a sufficient attachment.

7. A method according to any of the claims 4 -6, **characterized in that** said pressure load (P) provided by the press belt is not lower than 0,01 bar.

8. A method according to any of the claims 4 -7, **characterized in that** said pressure load (P) provided by the press belt has been chosen in view of its ability to straighten out possible curvatures and distortions in the inflexible board type and predominantly wooden products (1) as it presses the product bottom surface (5a) of said product against supporting rolls and/or supporting rollers or a flat block (19a) or flat blocks establishing a supporting platform (K), and that said pressure load (P) is not lower than 0.03 bar.

## Patentansprüche

1. Beschichtungsvorrichtung zur Beschichtung von unflexiblen brettartigen und überwiegend hölzernen Produkten (1), die eine durchschnittlich ebene Produktoberseite (5y) und eine Produktunterseite (5a) sowie eine Produktlänge (L1) und eine Produktbreite (W) aufweisen, mit thermoplastischem Polymer, wobei die Beschichtungsvorrichtung umfasst:
- eine Extrusionsform (9), die aus ihrem Formspalt (2) geschmolzenes, thermoplastisches Polymer (T) in der Form eines geschmolzenen Beschichtungsfilms (4) ausgibt, dessen Breite zur Produktbreite (W) passt;
- eine rotierende obere Walze (20y), mittels der der aus dem Formspalt austretende geschmolzene Beschichtungsfilm (4) auf die Produktoberseite (5y) des beschichtbaren Produkts über einen Liniendruckpunkt (13) geleitet wird, an dem der durch das thermoplastische Polymer dargestellte geschmolzene Beschichtungsfilm mit der Produktoberseite (5y) des beschichtbaren Produkts Kontakt herstellt, wobei der Formspalt (2) mit einem Abstand (Q) von dem Liniendruckpunkt (13) liegt;
- Stützwalzen und/oder Stützrollen und/oder einen oder mehrere flache Blöcke (19a), die eine Stützplattform (K) darstellen, wobei das Element/die Elemente eine Bewegung des Produkts (1) in einer linearen Bewegungsrichtung (V) ermöglichen; sowie
- einen Kühlabschnitt (15), in dem der geschmolzene Beschichtungsfilm (4) fest werden kann, um hierdurch eine Polymerbeschichtung (6) in fester Form und in Anbringung mit der Produktoberseite zu bilden,
**dadurch gekennzeichnet, dass** der Kühlabschnitt (15) umfasst:
- ein Pressband (3), das sich um Walzen (20y und 12 oder 11 und 12) herum erstreckt, die mit einem Abstand (L2) voneinander angeordnet sind, und das in gemeinsamer Richtung mit der beschichtbaren Produktlänge (L1) läuft, wobei das Band eine Bandoberseite (7y) und eine Bandunterseite (7a) über diesen Abstand aufweist;
- zwischen den Walzen (20y und 12 oder 11 und 12) zumindest ein Kühlblock (8) und/oder Presswalzen (18) oder Pressrollen (19), wobei zumindest ein Kühlblock und/oder Presswalzen und/oder Pressrollen in Oberflächenkontakt mit der Bandoberseite (7y) des Pressbands steht/stehen, und Kompressionselemente (17), die dazu ausgelegt sind, zumindest einige der Presswalzen oder der Pressrollen oder den zumindest einen Kühlblock zu der Stützplattform (K) mit einer solchen Kraft (F) zu drücken, die mit dem Pressband eine Drucklast (P) zwischen dem Beschichtungsfilm (4) und der Produktoberseite (5y) erzeugt, um hierdurch deren gegenseitigen Oberflächenkontakt einzuhalten; und
- der zumindest eine Kühlblock (8) und/oder die Presswalzen (18) einer Kühlung unterzogen werden, oder zwischen den Kühlblöcken (8) und/oder Presswalzen (18) und/oder Pressrollen (19) Strömungskanäle (23) für ein fließendes Medium (E) vorhanden sind, wobei die gegenseitige Kompression zwischen dem Beschichtungsfilm (4) und dem Produkt (1) während der Periode, in der der Beschichtungsfilm abkühlt und sich zur Polymerbeschichtung (6) verfestigt, beibehalten wird, wobei
- die Drucklast (P) im Hinblick auf ihre Fähigkeit gewählt worden ist, einen Trenneffekt zu überwinden, der durch die Verdampfung von Feuchtigkeit, die sich in dem Produkt (1) befindet, und durch den Kühlschrumpf des thermoplastischen Polymers verursacht wird, und worin die Verdampfung versucht, den Beschichtungsfilm von der Produktoberseite (5y) abzuheben.

2. Beschichtungsvorrichtung nach Anspruch 1, **dadurch gekennzeichnet, dass** unterhalb des Liniendruckpunkts (13) das Produkt (1) durch eine rotierende untere Walze (20a) gestützt wird; und das zumindest die obere Walze (20y) gekühlt ist.

3. Beschichtungsvorrichtung nach Anspruch 1 oder 2, **dadurch gekennzeichnet, dass** das Pressband (3) ein Metallband ist.

4. Verfahren zur Beschichtung von inflexiblen brettartigen und überwiegend hölzernen Produkten (1), die eine durchschnittlich ebene Produktobereseite (5y) und eine Produktunterseite (5a) sowie eine Produktlänge (L1) und eine Produktbreite (W) aufweisen, mit thermoplastischem Polymer unter Verwendung der in Anspruch 1 definierten Beschichtungsvorrichtung, wobei das Verfahren umfasst:
- Erlauben, dass sich das beschichtbare Produkt in eine Bewegungsrichtung (V) bewegt, die mit dessen Produktlänge (L1) konsistent ist;
- Extrudieren von geschmolzenem thermoplastischem Polymer (T) aus einem Formspalt (2) einer Extrusionsform (9) für einen geschmolzenen Beschichtungsfilm (4), der mittels einer rotierenden oberen Walze (20y) über einen Liniendruckpunkt (13), bei dem der durch das thermoplastische Polymer hergestellte geschmolzene Beschichtungsfilm mit der Produktoberseite (5y) Kontakt herstellt, auf die Produktoberseite des beschichtbaren Produkts geleitet wird, wobei der Formspalt mit einem Abstand (Q) von dem Linienkontaktpunkt (13) liegt;
- Erlauben, dass geschmolzene Beschichtungsfilm (4) fest wird, um hierdurch eine Polymerbeschichtung (6) mit fester Form und in Abringung mit der Oberseite des Produkts zu bilden,
**dadurch gekennzeichnet, dass** das Verfahren umfasst:
- Erlauben, dass der geschmolzene Beschichtungsfilm (4) in Oberflächenkontakt mit der Produktoberseite (5y) ist, wobei der Oberflächenkontakt mittels eines Pressbands (3) beibehalten wird, das gegen die Oberseite (5y) mit einer Presslast (P) gedrückt wird und in gleicher Richtung mit der Produktlänge (L1) läuft, wodurch der Beschichtungsfilm (4) gegen die Produktoberseite (5y) gedrückt bleibt; und
- Kühlen des Pressbands (3) und Erlauben, dass das Pressband (3) den Beschichtungsfilm (4) aus thermoplastischem Polymer von der geschmolzenen Form zu der festen Form abkühlt, während die durch die Presslast (P) erzeugte Oberflächenkompression beibehalten wird, wodurch der Beschichtungsfilm (4) fest wird und an der Produktoberseite (5y) angebracht wird, um hierdurch das Produkt (1) mit der Polymerbeschichtung (6) bereitzustellen; und
- wobei die von dem Pressband erzeugte Drucklast (P) im Hinblick auf deren Fähigkeit gewählt worden ist, einen Trenneffekt zu überwinden, der durch die Verdampfung von im Produkt (1) vorhandener Feuchtigkeit und durch den Verfestigungsschrumpf des thermoplastischen Polymers verursacht wird, und worin die Verdampfung versucht, den Beschichtungsfilm von der Produktoberseite (5y) abzuheben.

5. Verfahren von Anspruch 4, **dadurch gekennzeichnet, dass** der durch das Pressband (3) erreichte Oberflächenkontakt über eine Distanz (L2) beibehalten wird, die sich in der Bewegungsrichtung (V) erstreckt und entlang der das Pressband eine gegen das Produkt (1) drückende Bandunterseite (7a) und eine vom Produkt wegweisende Bandoberseite (7y) aufweist, und die Bandoberseite (7y) des Pressbands über den Abstand (L2) entweder mit einem fließenden Kühlmedium (E) oder einem Kühlblock (8) einer Kühlung unterzogen wird.

6. Verfahren nach Anspruch 4 oder 3, **dadurch gekennzeichnet, dass** der aus der Schmelze fest werdende Beschichtungsfilm (4) eine Anhaftung mit der Produktoberseite (5y) hat, die eine ausreichende Befestigung ergibt.

7. Verfahren nach einem der Ansprüche 4 bis 6, **dadurch gekennzeichnet, dass** die von dem Pressband erzeugte Presslast (P) nicht niedriger als 0,01 bar ist.

8. Verfahren nach einem der Ansprüche 4 bis 7, **dadurch gekennzeichnet, dass** die von dem Pressband erzeugte Presslast (P) im Hinblick auf ihre Fähigkeit gewählt worden ist, mögliche Krümmungen und Verformungen in den inflexiblen brettartigen und überwiegend hölzernen Produkten (1) geradezurichten, wenn es die Produktunterseite (5a) des Produkts gegen Stützwalzen und/oder Stützrollen oder einen flachen Block (19a) oder flache Blöcke, die eine Stützplattform (K) darstellen, presst, und dass die Presslast (P) nicht niedriger als 0,03 bar ist.

## Revendications

1. Appareil de revêtement pour revêtir des produits de type planche inflexible et principalement des produits en bois (1), qui ont une surface supérieure de produit plane en moyenne (5y) et une surface inférieure de produit (5a), ainsi qu'une longueur de produit (L1) et une largeur de produit (W), avec un polymère thermoplastique, ledit appareil de revêtement comprenant :
- une matrice d'extrusion (9) qui délivre depuis son espacement de matrice (2) un polymère thermoplastique fondu (T) sous la forme d'un film de revêtement fondu (4) ayant une largeur qui correspond à la largeur du produit (W) ;
- un rouleau supérieur rotatif (20y), au moyen duquel ledit film de revêtement fondu (4), provenant de l'espacement de matrice, est conduit sur la surface supérieure de produit (5y) du produit pouvant être revêtu, à travers un point de pression linéaire (13) au niveau de laquelle ledit film de revêtement fondu établi par le polymère thermoplastique fait contact avec la surface supérieure de produit (5y) du produit pouvant être revêtu, ledit espacement de matrice (2) étant situé à une distance (Q) dudit point de pression de ligne (13) ;
- des rouleaux de support et/ou des roulettes de support et/ou un ou plusieurs blocs plats (19a) établissant une plate-forme de support (K), le(s)dit(s) élément/éléments permettant le déplacement dudit produit (1) dans une direction de mouvement linéaire (V) ; ainsi que
- une section de refroidissement (15) dans laquelle ledit film de revêtement fondu (4) est laissé à solidifier, de manière à former un revêtement de polymère (6) sous forme solide et en fixation avec la surface supérieure du produit,
dans lequel ladite section de refroidissement (15) comprend :
- une courroie de presse (3) s'étendant autour des rouleaux (20y et 12 ou 11 et 12) placés à une distance (L2) l'un de l'autre et s'étendant de façon codirectionnelle avec la longueur du produit à revêtir (L1), ladite courroie ayant une surface supérieure de courroie (7y) et une surface inférieure de courroie (7a) de part et d'autre de la distance ;
- entre les rouleaux (20y et 12 ou 11 et 12) au moins un bloc de refroidissement (8) et/ou des rouleaux de presse (18) ou des roulettes de presse (19), ledit au moins un bloc de refroidissement et/ou rouleaux de presse ou roulettes de presse est/sont en contact de surface avec la surface supérieure de courroie (7y) de la courroie de presse, et des éléments de compression (17) qui sont adaptés pour pousser au moins une partie des rouleaux de presse ou des roulettes de presse ou l'au moins un boc de refroidissement vers la plate-forme de support (K) avec une telle force (F) qui génère avec la courroie de presse une charge de pression (P) entre le film de revêtement (4) et la surface supérieure de produit (5y), de manière à soutenir leur contact de surface mutuel ; et
- ledit au moins un bloc de refroidissement (8) et/ou les rouleaux de presse (18) sont soumis à refroidissement, ou entre lesdits blocs de refroidissement (8) et/ou rouleaux de presse (18) et/ou roulettes de presse (19) sont situés des canaux d'écoulement (23) pour un milieu fluide (E), la compression mutuelle entre le film de revêtement (4) et le produit (1) étant maintenue pendant la période de refroidissement du film de revêtement et solidification en revêtement de polymère (6), dans lequel
- ladite charge de pression (P) a été choisie compte tenu de sa capacité de compensation d'un effet de séparation, qui est causée par la vaporisation d'humidité présente dans le produit (1) et par le retrait de refroidissement de polymère thermoplastique et dans lequel la vaporisation tente de soulever le film de revêtement depuis la surface supérieure de produit (5y).

2. Appareil de revêtement selon la revendication 1, **caractérisé en ce qu'**au-dessous dudit point de pression de ligne (13) le produit (1) est soutenu par un rouleau inférieur rotatif (20a) ; et qu'au moins le rouleau supérieur (20y) est refroidi.

3. Appareil de revêtement selon la revendication 1 ou 2, **caractérisé en ce que** ladite courroie de pression (3) est une courroie métallique.

4. Procédé pour revêtir un type de carte inflexible et principalement des produits en bois (1), qui ont une surface supérieure de produit plane en moyenne (5y) et une surface inférieure de produit (5a), ainsi qu'une longueur de produit (L1) et une largeur de produit (W), avec un polymère thermoplastique, en utilisant l'appareil de revêtement défini dans la revendication 1, ledit procédé comprenant les étapes consistant à :
- permettre audit produit pouvant être revêtu de se déplacer dans une direction de déplacement (V) cohérente avec la longueur du produit (L1) ;
- extruder un polymère thermoplastique fondu (T) depuis un espacement de matrice (2) d'une matrice d'extrusion (9) pour un film de revêtement fondu (4) qui est conduit sur la surface supérieure de produit du produit pouvant être revêtu au moyen d'un rouleau supérieur rotatif (20y) de part et d'autre d'un point de pression de ligne (13) auquel ledit film de revêtement fondu établi par le polymère thermoplastique entre en contact avec la surface supérieure de produit (5y), l'espacement de matrice étant situé à une distance (Q) du point de pression de ligne (13) ;
- laisser ledit film de revêtement fondu (4) solidifier, de manière à former un revêtement de polymère (6) sous forme solide et en fixation avec la surface supérieure du produit, le procédé comprenant les étapes consistant à :
- amener le film de revêtement fondu (4) en contact de surface avec la surface supérieure de produit (5y), ledit contact de surface étant maintenu au moyen d'une courroie de presse (3), compressée contre la surface supérieure (5y) avec une charge de pression (P) et s'étendant de façon codirectionnelle avec la longueur du produit (L1), de telle manière que le film de revêtement (4) reste pressé contre la surface supérieure du produit (5y) ; et
- refroidir ladite courroie de presse (3) et laisser ladite courroie de presse (3) refroidir le film de revêtement (4) de polymère thermoplastique de la forme fondue à la forme solide tout en maintenant la surface de compression produite par la charge de pression (P), de telle manière que le film de revêtement (4) solidifie et devienne fixée à la surface supérieure du produit (5y), de manière à fournir au produit (1) ledit revêtement de polymère (6) ; et
- dans lequel la charge de pression (P) produite par la courroie de presse a été choisie compte tenu de sa capacité de compensation d'un effet de séparation, qui est causé par la vaporisation d'humidité présente dans le produit (1) et par le retrait de solidification du polymère thermoplastique et dans lequel la vaporisation tente de soulever le film de revêtement depuis la surface supérieure du produit (5y).

5. Procédé selon la revendication 4, **caractérisé en ce que** le contact de surface atteint par ladite courroie de presse (3) est maintenu de part et d'autre d'une distance (L2), qui s'étend dans la direction de déplacement (V) et le long de laquelle la courroie de presse a une surface inférieure de courroie (7a) pressant contre le produit (1) et une surface supérieure de courroie (7y) opposée au produit, et la courroie de presse a sa surface supérieure de courroie (7y) soumise à refroidissement de part et d'autre de ladite distance (L2) avec un milieu réfrigérant circulant (E) ou un bloc refroidisseur (8).

6. Procédé selon la revendication 4 ou 3, **caractérisé en ce que** le film de revêtement (4) solidifiant à partir de la matière fondue a une adhérence avec la surface supérieure de produit (5y) produisant une fixation suffisante.

7. Procédé selon l'une quelconque des revendications 4 à 6, **caractérisé en ce que** ladite charge de pression (P) produite par la courroie de presse n'est pas inférieure à 0,01 bar.

8. Procédé selon l'une quelconque des revendications 4 à 7, **caractérisé en ce que** ladite charge de pression (P) produite par la courroie de presse a été choisie compte tenu de sa capacité à redresser des courbures et déformations possibles dans le type de carte inflexible et principalement des produits en bois (1) lorsqu'elle presse la surface inférieure de produit (5a) dudit produit contre des rouleaux de support et/ou des roulettes de support ou un bloc plat (19a) ou des blocs plats établissant une plate-forme de support (K), et que ladite charge de pression (P) n'est pas inférieure à 0,03 bar.
